(19) **Europäisches Patentamt / European Patent Office / Office européen des brevets**

(11) **EP 1 978 267 A2**

(12) # EUROPÄISCHE PATENTANMELDUNG

(43) Veröffentlichungstag:
08.10.2008 Patentblatt 2008/41

(51) Int Cl.:
*F16C 19/54* (2006.01)    *F16C 33/58* (2006.01)
*F16C 39/02* (2006.01)    *F16C 39/04* (2006.01)

(21) Anmeldenummer: 08006683.0

(22) Anmeldetag: 01.04.2008

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **05.04.2007 DE 102007016591**

(71) Anmelder: **Rolls-Royce Deutschland Ltd & Co KG**
**15827 Blankenfelde-Mahlow (DE)**

(72) Erfinder: **Braun, Sören**
**15738 Zeuthen (DE)**

(74) Vertreter: **Weber, Joachim**
**Hoefer & Partner**
**Patentanwälte**
**Pilgersheimer Strasse 20**
**81543 München (DE)**

(54) **Mehrreihige Schub-Kugellageranordnung mit unsymmetrischer Lastenverteilung**

(57) Die vorliegende Erfindung betrifft eine Axiallageranordnung mit zumindest zwei Wälzlagern (1, 2), welche jeweils einen Außenring (3, 4) und zumindest einen Innenring (5, 6) umfassen, dadurch gekennzeichnet, dass die Innenringe (5, 6) axialfest auf einer Welle (7) gelagert sind, dass der Außenring (8) eines ersten Lagers (1) in Axialrichtung mittels zumindest einem elastisch verformbaren Zugelement (8) an einem Gehäuse (9) axialverschiebbar gehaltert ist und dass der Außenring (4) eines zweiten Lagers (2) axialverschiebbar am Gehäuse (9) gelagert und bei Axialverschiebung gegen zumindest einen Anschlag (10) des Gehäuses (9) in Anlage bringbar ist.

Fig.1

EP 1 978 267 A2

**Beschreibung**

Die Erfindung bezieht sich auf ein mehrreihiges Schub-Kugellager mit unsymmetrischer Lastverteilung.

Für axialbelastete Lager in Flugtriebwerken werden üblicherweise einreihige Kugellager verwendet, die als 3-Punkt-Lager oder als 4-Punkt-Lager ausgeführt sind.

Bei hohen Drehzahlen und hohen axialen Lasten ist die Tragfähigkeit dieser Lager begrenzt, da entweder die entstehenden Kontaktspannungen zwischen Rollkörpern und Laufbahnen das zulässige Höchstmaß überschreiten oder aber die Lebensdauer unterhalb der erforderlichen Werte liegt. Aktuell existierende mehrreihige Lagerkonzepte sind nicht in der Lage, auch unter wechselnden Temperaturbedingungen mit deutlichen Temperaturgradienten von innen nach außen eine bestimmbare Lastverteilung über alle Lagerreihen sicherzustellen.

Der Erfindung liegt die Aufgabe zugrunde, eine Axiallageranordnung der eingangs beschriebenen Art zu schaffen, welche bei einfachem Aufbau und einfacher, kostengünstiger Herstellbarkeit die Nachteile des Standes der Technik vermeidet und hohe axiale Lasten bei großer Lebensdauer übertragen kann.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß wird eine Axiallageranordnung mit zumindest zwei Wälzlagern geschaffen, welche jeweils einen Außenring und zumindest einen Innenring umfassen, wobei vorgesehen ist, dass die Innenringe axialfest auf einer Welle gelagert sind, dass der Außenring eines ersten Lagers in Axialrichtung mittels zumindest einem elastisch verformbaren Zugelement an einem Gehäuse axialverschiebbar gehaltert ist und dass der Außenring eines zweiten Lagers axialverschiebbar am Gehäuse gelagert und bei Axialverschiebung gegen zumindest einen Anschlag des Gehäuses in Anlage bringbar ist.

Erfindungsgemäß wird die Lagerlast somit definiert über die beiden Lager (Lagerreihen) verteilt. Somit sind erfindungsgemäß die einzelnen Lager/Lagerreihen in Bezug ihrer Funktionskenngrößen exakt berechenbar, insbesondere beispielsweise hinsichtlich der Kontaktspannung (Spannung im Wälzkontakt) und der Driftgeschwindigkeit (Gleitung, Schlupf).

Weiterhin ist die erfindungsgemäße Axiallageranordnung dazu geeignet, Temperaturgradienten problemlos aufzunehmen. Es können somit weite Betriebsspektren, wie bei Flugtriebwerken erforderlich, abgedeckt werden.

Weitere Konstruktionsmerkmale, wie beispielsweise Quetschöldämpfer, die zwischen dem Außenring und dem Gehäuse wirken, um auf hydraulische Weise eine Vibrationsdämpfung durchzuführen, lassen sich problemlos integrieren.

Ein weiterer Vorteil der erfindungsgemäßen Axiallageranordnung besteht darin, dass diese kompakt aufgebaut ist und sich bei kleinem Gewicht realisieren lässt.

Die erfindungsgemäße Lageranordnung ist weiterhin in der Lage, auch eine Lastumkehr aufzunehmen.

Im Folgenden wird die Erfindung anhand von Ausführungsbeispielen in Verbindung mit der Zeichnung beschrieben. Dabei zeigt:

Fig. 1    eine axiale Teil-Schnittansicht der erfindungsgemäßen Axiallageranordnung,

Fig. 2-4    unterschiedliche Lastzustände der in Fig. 1 gezeigten Axiallageranordnung,

Fig. 5    eine Gesamt-Schnittansicht analog den Fig. 1-4, und

Fig. 6    ein Diagramm der Lastverteilung über die beiden Lager.

Die erfindungsgemäße Lageranordnung verwendet zwei oder mehr Kugellager, durch die die axialen Lasten ungleichmäßig aber definiert verteilt aufgenommen werden. Der Einfachheit halber wird die nachfolgende Beschreibung auf zwei Lagerreihen beschränkt, mehr Reihen sind aber ebenso realisierbar.

Ein als bidirektionales Lager (Lager, das axiale Lasten in zwei Richtungen aufnehmen kann) ausgeführtes Kugellager ist mit Federstäben an die Struktur angebunden. Es nimmt während des gesamten Betriebsspektrums die auftretenden Lasten auf, allerdings nur bis zu einer Maximallast $F_{1,max}$.

Das zweite Lager kann als unidirektionales Lager (Lager, das axiale Lasten nur in einer Richtung aufnehmen kann) aufgebaut sein, ist entgegen der Belastungsrichtung frei verschiebbar und dient dazu, Spitzenlasten aufzunehmen. Es kann deutlich höhere Lasten erfahren als das erste, ist dafür aber während der meisten Betriebsphasen nur minimal so mit einer Kraft $F_{2,0}$ belastet, dass Schlupfprobleme vermieden werden. Erst wenn die zu übertragende Last $F_{ax}$ einen Wert von $F_{1,max} + F_{2,0}$ überschreitet, wird die gesamte Mehrlast $F_{2,sp} = F_{ax} - F_{1,max}$ durch das zweite Lager aufgenommen.

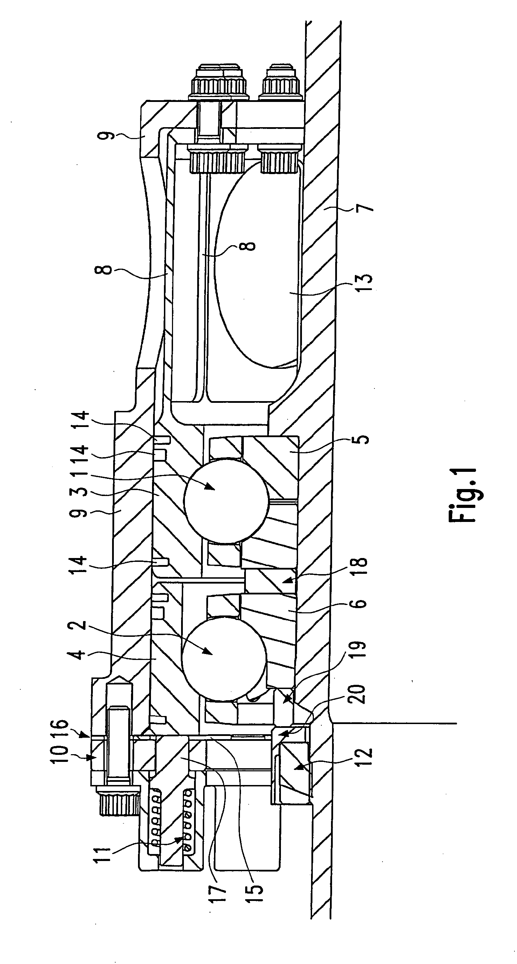

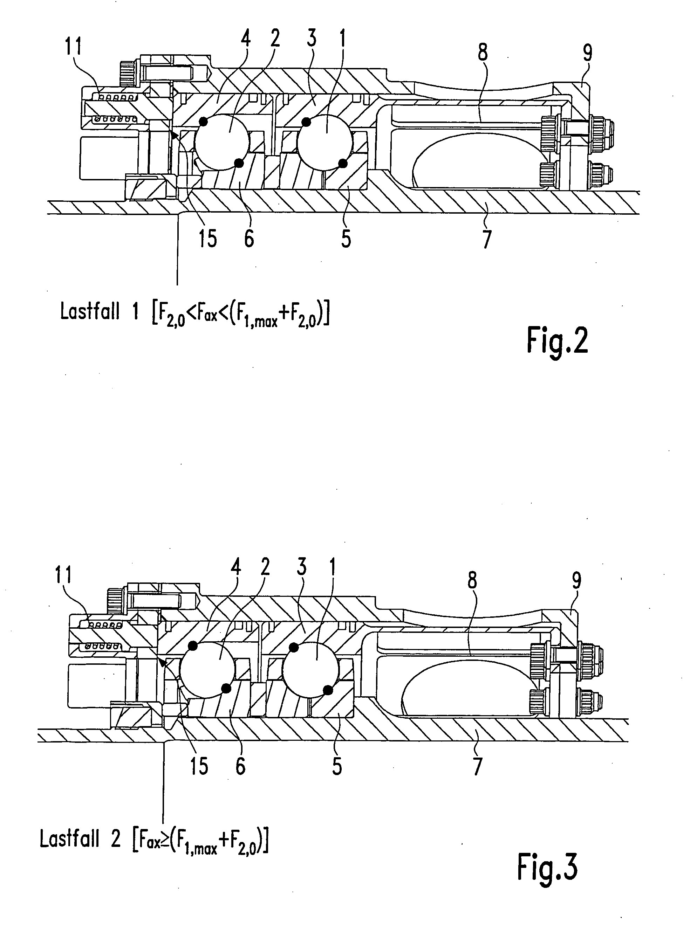

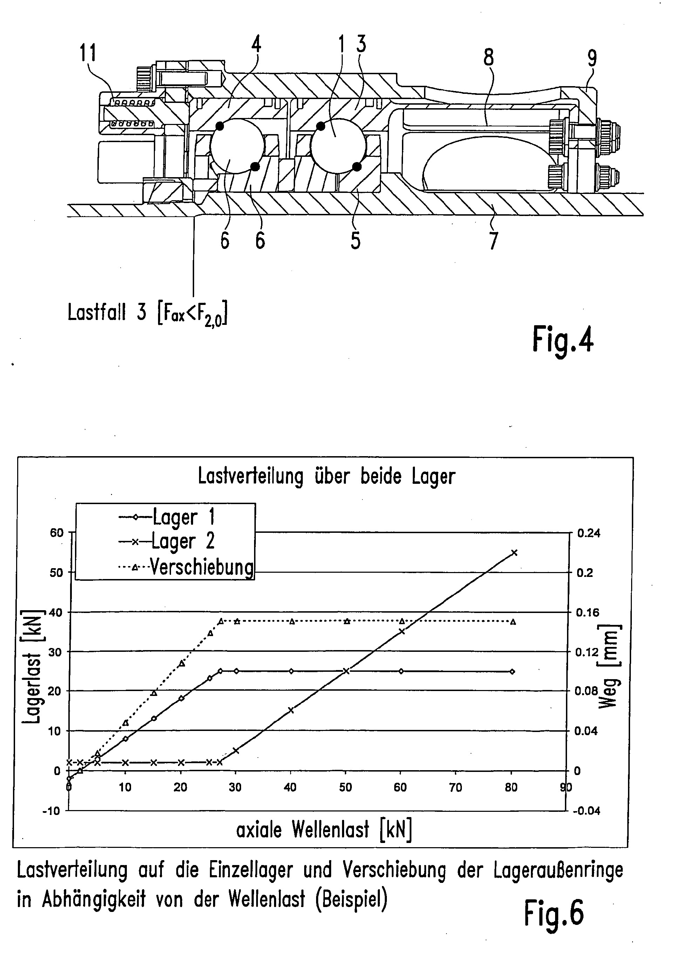

Eine schematische Darstellung der erfindungsgemäßen Lageranordnung ist in Fig. 1 gezeigt, in den Fig. 2 bis 4 werden die drei typischen Lastverteilungsfälle dargestellt. Die Figuren zeigen ein erstes Lager 1 mit einem Außenring 3 und einem Innenring 5 (welcher auch zweiteilig ausgebildet sein kann), sowie ein zweites Lager 2 mit einem Außenring 4 und einem Innenring 6, die auf einer Welle 7 mittels einer Wellenmutter 12 und Abstandsringen 18, 19 gegen einen Ansatz 13 vorgespannt und befestigt sind.

An einem Gehäuse 9 ist ein elastisch verformbares Zugelement 8 (Federstab) befestigt, welches mit dem Außenring 2 des ersten Lagers 1 verbunden ist.

Der Außenring 4 des zweiten Lagers 2 wird axial mittels eines elastischen Elements 11 (Feder) über ein Druckelement 17 vorgespannt, so dass sich ein Luftspalt 15 ($s_0$) ergibt. Eine Anpassung des gesamten Lagers kann über einen Anschlag 10 (Anschlagring), der über zumindest eine Distanzscheibe 16 (Justierscheibe) gegen das Gehäuse 9 verspannt ist, erfolgen.

Die an den Außenringen 3, 4 gezeigten Nuten 14 dienen der hydraulischen Dämpfung (Quetschöldämpfer), so wie dies aus dem Stand der Technik bekannt ist und ermöglichen weiterhin eine Axialverschiebbarkeit der Außenringe 3, 4 relativ zu dem Gehäuse 9.

Die beiden Lageraußenringe 3, 4 führen während des Betriebes eine Bewegung in Belastungsrichtung relativ zum Gehäuse 9 aus, so dass der Luftspalt 15 ($s_0$) zwischen dem Außenring 4 von Lager 2 und dem Anschlagring (10) bei geringen Lasten maximal ist und bei zunehmenden Lasten kleiner wird, bis er mit Erreichen von $F_{1,max} + F_{2,0}$ den Wert 0 erreicht (die Mindestlast $F_{2,0}$ auf Lager 2 wird in diesem Beispiel durch eine Spiralfeder (elastisches Element 11) erreicht, es sind aber auch andere Vorspannungen durch pneumatische, hydraulische, mechanische oder sonstige Mechanismen denkbar).

Ab diesem Punkt ist eine Zunahme der durch Lager 1 übertragenen Lasten nicht mehr möglich, und alle höheren Axialkräfte von der Welle 7 werden durch Lager 2 übertragen.

Der Luftspalt zwischen den beiden Lageraußenringen 3, 4 hat keine definierte Größe. Er muss aber so ausgelegt sein, dass bei Lastumkehr die beiden Lagerringe 3, 4 nicht miteinander in Kontakt kommen.

Die Justierscheibe (Distanzscheibe 16) muss in verschiedenen Stärken verfügbar sein. Sie dient dazu, Fertigungstoleranzen auszugleichen und den Luftspalt 15 ($s_0$) einzustellen.

Die Abstandsringe 18, 19 legen die Lagerinnenringe 5, 6 von Lager 1 und Lager 2 auf der Welle 7 fest. Das Lagerpaket wird über die Sicherungsscheibe 20 und die Wellenmutter 12 axial festgezogen. Ihre Position zueinander ist unabhängig von der axialen Wellenlast.

Als Ausgangswerte sind der zulässige Luftspalt $s_0$ (er wird durch die maximal zulässige Axialverschiebung der Welle definiert) und die Maximallast $F_{1,max}$ auf dem Lager 1 zu definieren. Damit lässt sich dann anhand der Materialkenngrößen Steckgrenze $\sigma_P$ und Elastizitätsmodul E die benötigte Federstablänge als:

$$l_B = \frac{a \cdot s_0 \cdot E}{\sigma_P}$$

sowie die Summe der Federstabquerschnittsflächen als:

$$A = \frac{a \cdot F_{1,max}}{\sigma_P}$$

(a = Sicherheitsfaktor, Verhältnis von Streckgrenze $\sigma P$ zu maximaler Zugspannung in den Federstäben $\sigma_{B,max}$: a = ($\sigma p/\sigma_{B,max}$) ermitteln.

Die Maximallast auf Lager 1 lässt sich dabei so einstellen, dass die über einen Standardzyklus der Wellenlast ermittelte Lebensdauer der beiden Lagerreihen angeglichen wird. Auch Bauraumoptimierte Auslegungen sind möglich.

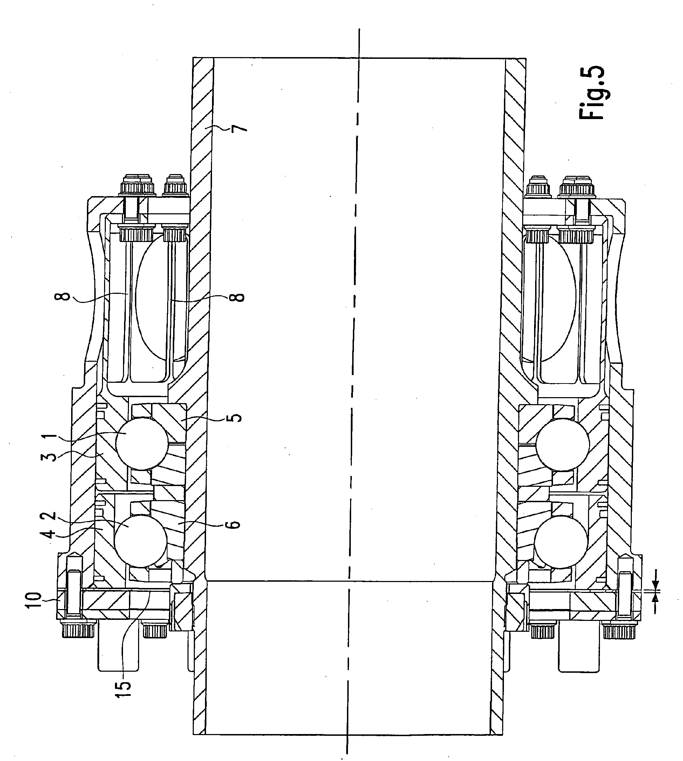

Die aufgebrachte Wellenlast verteilt sich unsymmetrisch aber definiert über beide Lager 1, 2. Bis zum Anlegen der Stirnfläche von Lager 2 an den Anschlagring 10 wird über Lager 2 konstant die Last $F_{2,0}$ übertragen. Das Lager 1 überträgt bei Nulllast auf der Welle zunächst die umgekehrte Vorspannlast $F_{2,0}$. Bei einem Anstieg der Wellenlast bis $F_W=(F_{2,0}+F_{1,max})$ steigt zunächst nur die Last auf Lager 1, wobei der Lastanstieg zu einer Längung der Federstäbe (elastisch verformbares Zugelement 8) entsprechend dem Hook'schen Gesetz führt. In dem Moment, wo Lager 2 am Anschlagring 10 anliegt, kann keine weitere Längung der Federstäbe 8 erfolgen, es kann also auch kein weiterer Lastanstieg auf Lager 1 erfolgen. Alle zusätzlichen Lasten werden nun über Lager 2 übertragen. Der Zusammenhang ist in Fig. 5 dargestellt.

Bezugszeichenliste

| 1 | Erstes Lager |
|---|---|
| 2 | Zweites Lager |
| 3, 4 | Außenring |
| 5, 6 | Innenring |
| 7 | Welle |
| 8 | Elastisch verformbares Zugelement/Federstab |
| 9 | Gehäuse |
| 10 | Anschlag/Anschlagring |
| 11 | Elastisches Element (Feder) |
| 12 | Wellenmutter |
| 13 | Ansatz |
| 14 | Nut |
| 15 | Luftspalt $s_0$ |
| 16 | Distanzscheibe/Justierscheibe |
| 17 | Druckelement |
| 18 | Abstandsring |
| 19 | Abstandsring |
| 20 | Sicherungsscheibe |

**Patentansprüche**

1. Axiallageranordnung mit zumindest zwei Wälzlagern (1, 2), welche jeweils einen Außenring (3, 4) und zumindest einen Innenring (5, 6) umfassen, **dadurch gekennzeichnet, dass** die Innenringe (5, 6) axialfest auf einer Welle (7) gelagert sind, dass der Außenring (8) eines ersten Lagers (1) in Axialrichtung mittels zumindest einem elastisch verformbaren Zugelement (8) an einem Gehäuse (9) axialverschiebbar gehaltert ist und dass der Außenring (4) eines zweiten Lagers (2) axialverschiebbar am Gehäuse (9) gelagert und bei Axialverschiebung gegen zumindest einen Anschlag (10) des Gehäuses (9) in Anlage bringbar ist.

2. Axiallageranordnung nach Anspruch 1, **dadurch gekennzeichnet, dass** der Außenring (4) des zweiten Lagers (2) elastisch in Richtung des ersten Lagers (1) vorgespannt ist.

3. Axiallageranordnung nach Anspruch 1 oder 2, **dadurch gekennzeichnet, dass** die Position des Anschlags (10) des Gehäuses (9) einstellbar ist.

4. Axiallageranordnung nach einem der Ansprüche 1 bis 3, **dadurch gekennzeichnet, dass** das erste Lager (1) zur Aufnahme von Axiallasten in zwei Richtungen ausgebildet ist.

5. Axiallageranordnung nach einem der Ansprüche 1 bis 4, **dadurch gekennzeichnet, dass** der Außenring (3) des ersten Lagers (1) mittels des elastisch verformbaren Zugelements (8) um einen Weg zwischen 20/100 mm und 10/100 mm verschiebbar ist.

6. Axiallageranordnung nach einem der Ansprüche 1 bis 5, **dadurch gekennzeichnet, dass** die beiden Axialringe (3, 4) stets einen Abstand zueinander aufweisen.

7. Axiallageranordnung nach einem der. Ansprüche 2 bis 6, **dadurch gekennzeichnet, dass** das zweite Lager (2) mittels eines elastischen Elements (11) mit einer Vorspannlast belastet ist.

8. Axiallageranordnung nach Anspruch 7, **dadurch gekennzeichnet, dass** das erste Lager (1) bis zu einer Maximallast belastbar ist und dass das zweite Lager (2) bei einer Axiallast größer gleich der Summe der Vorspannlast und der Maximallast des ersten Lagers belastet wird.

Fig.1

EP 1 978 267 A2

Lastfall 1 $[F_{2,0}<F_{ax}<(F_{1,max}+F_{2,0})]$

Fig.2

Lastfall 2 $[F_{ax}\geq(F_{1,max}+F_{2,0})]$

Fig.3

Lastfall 3 $[F_{ax}<F_{2,0}]$

**Fig.4**

## Lastverteilung über beide Lager

—◇—Lager 1
—×—Lager 2
····△····Verschiebung

Lagerlast [kN]

Weg [mm]

axiale Wellenlast [kN]

Lastverteilung auf die Einzellager und Verschiebung der Lageraußenringe
in Abhängigkeit von der Wellenlast (Beispiel)

**Fig.6**

Fig.5